# FASCICULE DE BREVET EUROPEEN

(11) **EP 2 984 043 B1**
(45) Date de publication et mention de la délivrance du brevet: **15.07.2020**
(21) Numéro de dépôt: 14718536.7
(22) Date de dépôt: 04.04.2014
(51) Int. Cl.: C02F 1/28, C02F 9/02, C02F 103/36, C02F 101/32, C02F 101/34, C02F 1/44, C02F 9/00

(54) **PROCEDE ET INSTALLATION DE TRAITEMENT DES EAUX PROVENANT DES INDUSTRIES PETROLIERES ET GAZIERES, NOTAMMENT DES EAUX DE PRODUCTION DES CHAMPS PETROLIERS ET/OU GAZIERS**
VERFAHREN UND VORRICHTUNG ZUR BEHANDLUNG VON WÄSSERN AUS DER ERDÖL- UND ERDGASINDUSTRIE, INSBESONDERE VON AUF ERDÖLFELDERN UND/ODER ERGASFELDERN PRODUZIERTEM WASSER
PROCESS AND INSTALLATION FOR TREATING WATER FROM THE PETROLEUM AND NATURAL GAS INDUSTRY, ESPECIALLY PRODUCED WATER FROM OILFIELDS AND/OR GASFIELDS

(30) Priorité: 10.04.2013 FR 1353216
(43) Date de publication de la demande: 17.02.2016
(73) Titulaire: Veolia Water Solutions & Technologies Support, 94417 Saint-Maurice Cedex (FR)
(72) Inventeur: HENDOU, Mouloud, F-78660 Prunay En Yvelines (FR); SAGNE, Camille, F-92130 Issy Les Moulineaux (FR)
(74) Mandataire: Vidon Brevets & Stratégie
(86) Numéro de dépôt international: PCT/EP2014/056770
(87) Numéro de publication internationale: WO 2014/166821

(56) Documents cités:
- EP-A1- 0 432 787
- EP-A1- 0 901 805
- WO-A1-94/14513
- WO-A2-2011/133159
- US-A- 5 236 594
- US-A1- 2012 137 883
- US-B1- 7 731 854

## Description

### Domaine de l'invention

L'invention concerne le domaine du traitement des effluents industriels et plus précisément le domaine du traitement des eaux usées industrielles provenant des industries du pétrole, du gaz et pétrochimiques, telles que les installations de production des champs pétrolier et/ou gaziers ou encore les raffineries, en vue de leur réutilisation.

### Art antérieur

Le recyclage de l'eau à partir des effluents industriels est une problématique majeure à laquelle de nombreuses recherches ont été consacrées cette dernière décennie.

Cette problématique est particulièrement sensible dans l'industrie du gaz et du pétrole où l'on recherche à réutiliser, après traitement, les eaux de production des champs pétroliers et gaziers ou encore les eaux utilisées dans le cadre du raffinage des produits pétroliers. En effet, notamment, sur les sites d'extraction de pétrole ou de gaz, l'eau est souvent rare et coûteuse.

De telles eaux industrielles présentent toutefois la particularité d'être très chargées en matières organiques. Ces matières organiques peuvent être constitué par le produit, gaz ou pétrole, extrait - c'est le cas notamment pour les eaux de production des champs pétroliers ou gaziers - ou par des réactifs ou résidus de ceux-ci utilisés pour le traitement de tels produits - c'est le cas notamment pour les eaux industrielles provenant des raffineries.

Quasiment tous les procédés développés aujourd'hui dans ce but intègrent une étape de filtration membranaire par osmose inverse qui tend à assurer la production d'un perméat répondant aux spécifications d'une eau réutilisable sur les sites industriels. Toutefois, les matières organiques contenues dans ces eaux industrielles sont autant de sources d'endommagement des membranes d'osmose inverse qui nécessitent le lavage fréquent des membranes.

Les développements de ces procédés se trouvent donc aujourd'hui limités en raison des membranes d'osmose inverse qui présentent une grande sensibilité à la présence de matières organiques dans les eaux destinées au traitement. La présence de matières organiques est en pratique un handicap à l'utilisation de ces membranes se traduisant par leur colmatage fréquent et la diminution de leur durée de vie.

Ce colmatage peut être réversible dans certains cas à condition d'effectuer périodiquement des nettoyages chimiques des membranes, ce qui engendre une consommation de réactifs chimiques pouvant devenir rédhibitoire à l'utilisation de ces technologies. Plus grave encore ce colmatage peut devenir irréversible et les membranes inopérantes; c'est le cas notamment avec les effluents de raffinerie et les eaux de production des champs pétroliers qui contiennent du naphtalène pouvant réagir avec les membranes d'osmose inverse en polyamide, cette réaction conduisant à la destruction totale ou partielle des membranes.

Plusieurs solutions sont mises en oeuvre aujourd'hui pour la protection des membranes d'osmose inverse. On connaît notamment l'utilisation du charbon actif pour l'élimination des matières organiques par adsorption sur ce composé, mais cette méthode est limitée aux faibles débits d'eau et aux concentrations basses en matières organiques pour réduire les consommations en charbon actif. De ce fait, son utilisation ne peut être recommandée pour le traitement des eaux de production des industries gazières et pétrolières.

On connaît aussi des procédés d'osmose inverse à pH élevé rendant la matière organique peu colmatante. De tels procédés sont notamment décrits dans les documents de brevet WO2008073963, US 5,925,255 and US 6,537,456. Toutefois, leur utilisation est sujette à une consommation excessive de réactifs et une production importante de boues notamment pour les eaux à dureté et alcalinité élevées, ce qui est le cas des eaux de production des champs pétroliers et gaziers. De ce fait, l'utilisation de ces procédés pour des sites éloignés devient délicate et nécessite une logistique particulière pour l'approvisionnement des réactifs et l'évacuation des déchets.

En résumé, les solutions offertes actuellement ne trouvent qu'un domaine limité d'application dans le traitement des eaux de production des industries gazières et pétrolières et n'offrent en aucun cas la possibilité de valoriser les polluants contenus dans l'eau à traiter comme produits.

US 7 731 854 B décrit la mise en œuvre d'un traitement sur charbon actif en grains en amont d'une filtration par osmose inverse.

US 5 236 594 A enseigne que des résines polymériques réticulées non ioniques permettent d'éliminer des contaminants organiques.

### Objectifs de l'invention

Un objectif de la présente invention est de proposer un procédé amélioré de traitement par osmose inverse des eaux de production des industries gazières et pétrolières en vue de leur ré-utilisation.

Notamment, un objectif de la présente invention est de présenter un tel procédé qui, dans au moins certains modes de réalisation, permet d'améliorer le taux de conversion des unités de filtration par osmose inverse, c'est-à-dire d'augmenter le pourcentage d'eau réutilisable, produite sous forme de perméat par ces unités, par rapport aux eaux les alimentant, tout en réduisant parallèlement les volumes de concentrat d'osmose inverse.

Encore un objectif de la présente invention est de divulguer un tel procédé qui, dans au moins certains modes de réalisation, permet d'augmenter la durée de vie des membranes d'osmose inverse.

Encore un objectif de la présente invention est de décrire un tel procédé qui, dans au moins certains modes de réalisation, permet de réduire la fréquence de lavage des membranes d'osmose inverse, conduisant ainsi à des économies de réactifs de lavage et à la réduction des coûts de traitement des eaux de lavage souillées.

Encore un autre objectif de la présente invention est de proposer un tel procédé qui, dans au moins certains modes de réalisation, permet de récupérer les polluants sous forme de produits.

Un autre objectif de la présente invention est de divulguer une installation pour la mise en œuvre d'un tel procédé.

### Exposé de l'invention

Ces différents objectifs, ou au moins certains d'entre eux, sont atteints grâce à la présente invention qui concerne un procédé de traitement des eaux provenant des industries pétrolières et gazières, notamment des eaux de production des champs pétroliers et/ou gaziers, en vue de leur réutilisation, comprenant une étape de filtration desdites eaux sur membrane d'osmose inverse, ce procédé étant caractérisé en ce qu'il comprend une étape d'adsorption de la matière organique contenue dans lesdites eaux, ladite étape d'adsorption étant prévue en amont de ladite étape de filtration et étant mise en œuvre sur au moins une résine adsorbante choisie dans le groupe constitué par les résines polymériques réticulées non ionisées et les résines charbonnées microporeuses également par nature non ionisées.

La présente invention consiste donc en l'utilisation de résines adsorbantes non ionisées (ce qui exclut les résines échanges d'ions) se présentant sous forme de résines polymériques réticulées non ionisées et/ou de résines charbonnées microporeuses pour la protection des membranes d'osmose inverse vis-à-vis des matières organiques contenues dans les eaux industrielles provenant des industries du pétrole, du gaz et pétrochimiques, notamment des eaux de production des champs pétroliers et gaziers.

La présente invention permet d'opérer à des débits d'eaux à traiter faibles ou forts, quelle que soit la concentration des composés organiques néfastes aux membranes d'osmose inverse présents dans celles-ci.

Selon une variante, le procédé selon l'invention comprend une étape de prétraitement prévue en amont de ladite étape d'adsorption de la matière organique.

Un tel prétraitement peut avantageusement consister en une simple séparation physique, un traitement physico-chimique, un traitement biologique ou encore un traitement plus élaboré combinant deux ou les trois traitements précités.

Selon un mode de réalisation du procédé selon l'invention, on utilisera une seule résine spécifique adsorbante dédiée à l'élimination d'un composé organique cible.

Selon d'autres modes de réalisation, ladite étape d'adsorption sera mise en œuvre sur deux ou plusieurs résines adsorbantes permettant l'élimination d'un ou plusieurs composés organiques.

Le choix de la ou des résines adsorbantes sera fait en fonction de la nature et de la concentration en polluant(s) présent(s) dans les effluents à traiter.

Préférentiellement, le procédé selon l'invention comprend une étape de régénération *in situ* de ladite au moins une résine adsorbante. Une telle étape de régénération permet la réutilisation des résines et leur maintien en état d'opération optimal en termes de rendement d'élimination de la matière organique et de capacité d'adsorption.

Avantageusement, ladite étape de régénération *in situ* de ladite au moins une résine adsorbante est réalisée par un média de régénération choisi dans le groupe constitué par de la vapeur d'eau chauffée à une température comprise entre 120°C et 200° C, préférentiellement entre 120 °C et 150 °C, un solvant à faible point d'ébullition, une base, un acide, ou par la combinaison de deux ou plusieurs de ces médias de régénération.

Selon une variante, ledit média de régénération est un solvant à faible point d'ébullition, tel qu'un alcool ou un cétone, le procédé comprenant alors de plus une étape ultérieure de recyclage dudit solvant par évaporation conduisant à l'obtention de deux phases : une phase condensée constituée de solvant régénéré apte à être réutilisé lors d'une étape ultérieure de régénération in situ de ladite au moins une résine adsorbante et une phase organique constituée des matières organiques adsorbées.

Selon une autre variante, ledit média de régénération est de la vapeur d'eau , le procédé comprenant alors de plus un étape ultérieure de condensation de ladite vapeur d'eau conduisant à l'obtention de deux phases : une phase aqueuse constituée d'eau saturée en composés organiques, et une phase organique constituée des matières organiques adsorbées.

Dans ce cas, le procédé comprend, également préférentiellement, une étape de traitement de ladite phase aqueuse constituée d'eau saturée en composés organiques consistant à la faire passer sur ladite au moins une résine adsorbante de façon à la désaturer en composés organiques et conduisant à une eau apte à être réutilisée lors d'une étape ultérieure de régénération *in situ* de ladite au moins une résine adsorbante.

Lorsque lesdites eaux industrielles traitées grâce au procédé selon l'invention sont des eaux de production des champs pétroliers et/ou gaziers, ladite phase organique constituée des matières organiques adsorbées obtenue lors de la régénération de la résine est constituée de pétrole et de matières organiques diverses telles que du benzène, toluène, xylène, ethylbenzène et styrène qui peuvent ainsi être récupérés. L'invention permet alors la récupération des composés organiques comme produits ce qui n'était pas permis par l'art antérieur.

La présente invention concerne également toute installation pour la mise en œuvre du procédé décrit ci-dessus caractérisée en ce qu'elle comprend :
- des moyens d'amenée d'eaux industrielles ;
- au moins une unité de filtration membranaire par osmose inverse ;
- au moins une colonne de résine adsorbante choisie dans le groupe constitué par les résines polymériques réticulées non ionisées et les résines charbonnées microporeuses ;
- des moyens d'évacuation d'eaux traitées ;
ladite au moins une colonne étant prévue en amont de ladite au moins une unité de filtration membranaire par osmose inverse.

Avantageusement, ladite installation comprend au moins une unité de prétraitement prévue en amont de ladite au moins une colonne. Cette unité de prétraitement pourra être constituée par un ou plusieurs modules mettant en œuvre un séparation physique, tel que par exemple un ou plusieurs modules d'ultrafiltration membranaire, par des moyens de traitement physico-chimiques, par des moyens de traitement biologique ou encore par des moyens de traitement plus élaborés combinant deux ou les trois traitements précités.

Avantageusement, l'installation selon l'invention comprend des moyens de régénération de ladite au moins une résine, à l'aide d'au moins un média de régénération choisi dans le groupe constitué par de la vapeur d'eau chauffée à une température comprise entre 120°C et 200° C, préférentiellement entre 120 °C et 150 °C, un solvant à faible point d'ébullition, une base, un acide, ou par la combinaison de deux ou plusieurs de ces médias de régénération.

Lorsque le média de régénération est un solvant à faible point d'ébullition, tel que de l'éthanol, l'installation comprend préférentiellement des moyens de recyclage par évaporation/condensation dudit solvant après son passage sur ladite au moins une colonne.

Lorsque le média de régénération est de la vapeur, l'installation comprend préférentiellement des moyens de condensation de la vapeur d'eau après sont passage sur ladite au moins une colonne, des moyens d'acheminement de la phase ainsi aqueuse obtenue en tête de ladite colonne, et des moyens de récupération en pied de celle-ci d'une eau susceptible d'être chauffée pour donner de la vapeur de régénération.

### Description détaillée de trois modes de réalisation de l'invention :

L'invention, ainsi que les différents avantages qu'elle présente, seront mieux compris, grâce à la description qui suit de trois modes de réalisation selon celle-ci, donnés à titre illustratif et non limitatif.

Dans le premier mode de réalisation, deux types de résines distinctes ont été mises en œuvre, à savoir une résine polymérique non ionique réticulée et une résine charbonnée.

Dans le second mode de réalisation, seule une résine polymérique non ionique réticulée a été mise en œuvre.

Dans le troisième mode de réalisation, seule une résine charbonnée a été mise en œuvre.

### Premier mode de réalisation

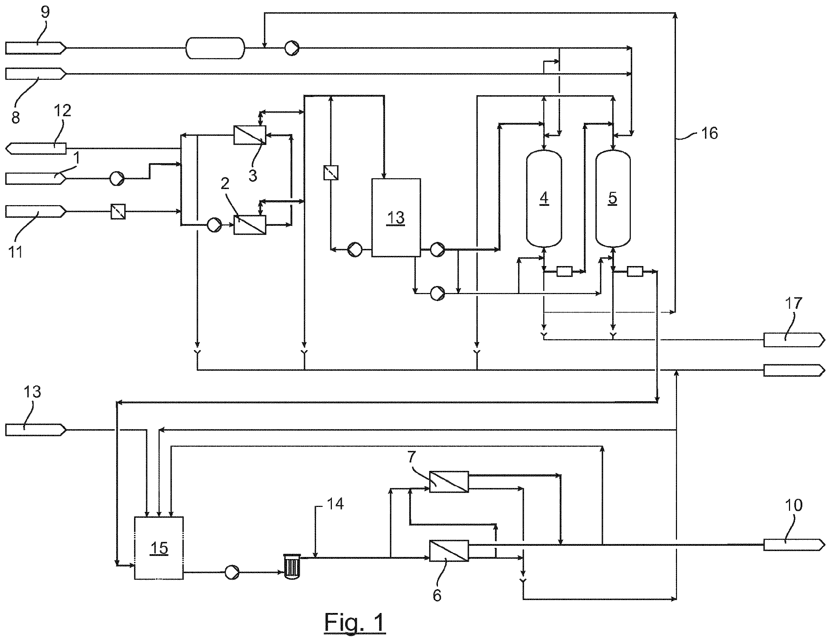

Ce premier mode de réalisation est décrit en référence à la figure 1 qui représente une vue schématique d'une installation pilote mettant en œuvre un procédé selon l'invention pour le traitement d'eaux de production de champs pétroliers en vue de leur réutilisation.

L'installation pilote comprend des moyens d'amenée 1 d'eaux polluées à traiter vers une unité de prétraitement par ultrafiltration mettant en œuvre deux modules membranaires d'ultrafiltration 2,3 montés en cascade. Cette unité de prétraitement permet l'élimination des matières en suspension et des huiles libres contenues dans les effluents. L'installation pilote inclut des moyens d'amenée 11 et des moyens d'évacuation 12 d'une solution de réactif de lavage in situ des membranes d'ultrafiltration.

Après ce prétraitement, les effluents prétraités sont dirigés, dans le cas de l'exemple, vers un réservoir tampon facultatif 13 puis dirigés vers deux colonnes montées en série 4,5 renfermant deux résines spécifiques.

La première colonne 4 renferme une résine polymérique réticulée non ionisée (résine 1) disponible dans le commerce et sélectionnée pour sa capacité à adsorber les composés aromatiques tels que les BTEX (Benzène, Toluène, Ethylbenzène, Xylène) et les composés polycycliques tels les HAP (ex : naphtalène) ; les caractéristiques de cette résine sont données dans le tableau 1 ci-après :

**Tableau 1**

| **Propriétés physiques et chimiques** | |
|---|---|
| Forme ionique | neutre |
| Groupe fonctionnel | aucun |
| Matrice | Polystyrène réticulé |
| Structure | Billes poreuses |
| Coefficient d'uniformité | 1,1 max |
| Taille moyenne des billes | 0,44 à 0,54 mm |
| Masse volumique apparente | 600 g/l |
| Capacité de rétention d'eau | 600 g/kg résine + /- 5% |
| Surface spécifique (méthode BET) | 800 m²/g environ |
| Volume de pores | 1,2 cm³/g environ |
| Diamètre moyen des pores | 5 à 10 nm |
| Stabilité au pH | 0 à 14 |
| Stabilité à la température | -20 °C à 120 ° C |

La seconde colonne 5 renferme une résine charbonnée microporeuse (résine 2), également disponible dans le commerce, sélectionnée pour son aptitude à fixer plus avantageusement des composés à l'état de traces. Les caractéristiques de cette résine sont données dans le tableau 2 ci-après :

**Tableau 2**

| **Propriétés physiques et chimiques** | |
|---|---|
| Forme ionique | neutre |
| Groupes fonctionnels | aucun |
| Matrice | carbone |
| Granulométrie | 0,4 à 0,8 mm (>90%) |
| Masse volumique apparente | 550 à 650 g/l +/- 5 % |
| Surface spécifique (Methode BET) | 1200 m²/g environ |
| Volume des pores | 0,15 cm³/g environ |
| Diamètre moyes des pores | 8 nm |
| Stabilité à la température | -20 °C à 300 °C |

L'installation pilote comprend des moyens de régénération 8, 9 des résines, soit par de la vapeur d'eau 8, soit par un solvant 9.

Lorsque la régénération est effectuée grâce à un solvant, le solvant chargé en matières organique peut être récupéré à la sortie des colonnes afin de subir une évaporation conduisant à l'obtention de deux phases : une phase condensée constituée de solvant régénéré recyclé par la canalisation 16 et une phase organique constituée des matières organiques adsorbées pouvant être évacué en 17.

Lorsque la régénération est effectuée avec de la vapeur, celle-ci peut être évacuée en 17 à la sortie des colonnes, pour être ensuite condensée, la condensation conduisant à l'obtention de deux phases : une phase aqueuse constituée d'eau saturée en composés organiques, et une phase organique constituée des matières organiques adsorbées. La phase aqueuse peut ensuite être passée sur la première colonne de résine adsorbante de façon à la dessaturer en composés organiques, ceci conduisant à une eau apte à être réutilisée pour faire de la vapeur lors d'une étape ultérieure de régénération in situ de des résines.

En aval des colonnes de résine 4,5 une unité de filtration membranaire par osmose inverse comprenant deux étages 6, 7 est prévue. Cette unité peut être mise en œuvre soit avec les deux étages pour augmenter le taux de conversion soit avec deux passes pour mieux raffiner le perméat d'osmose. Ce perméat d'osmose, constitué d'eau d'une qualité permettant sa réutilisation, est évacuée par une canalisation 10.

L'installation pilote inclut des moyens d'amenée 13 et des moyens d'évacuation d'une solution chimique de lavage in situ des membranes d'osmose inverse (ces derniers correspondant aux moyens d'évacuation 12 de la solution de lavage in situ des membranes d'ultrafiltration utilisées pour le prétraitement). La solution de nettoyage est envoyée dans le cadre de l'exemple dans le réservoir tampon 15. Cette solution peut aussi être envoyée directement dans la conduite d'amenée des effluents traités sur résine. Des moyens d'injection 14 d'un produit séquestrant visant à limiter l'entartrage des membranes sont également prévus en amont de celles-ci.

Les tests de régénération ont été réalisés par de la vapeur et par un solvant à faible point d'ébullition, en l'occurrence l'éthanol. On notera que l'on pourra utiliser l'un seulement de ces deux médias de régénération ou les deux.

Les caractéristiques de l'eau de production d'un champs pétrolier traités grâce à l'installation décrite ci-dessus sont exposés dans le tableau 3 ci-après.

**Tableau 3**

| **Paramètres** | **Unité** | **Gamme de Valeur** |
|---|---|---|
| pH | upH | 6,5 - 7,5 |
| Chlorure | mg/L | 2500 - 5000 |
| Sulfate | mg/L | 500 - 2000 |
| Alcalinité | ppm CaCO₃ | 500 - 2000 |
| Sodium | mg/L | 1500 3500 |
| Calcium | mg/L | 200 - 2000 |
| Magnésium | mg/L | 50 - 300 |
| Sels Dissous | mg/L | 5000 -10000 |
| Benzène | mg/L | 1 - 30 |
| Toluène | mg/L | 1 - 30 |
| Ethylbenzène | mg/L | 1 - 10 |
| Xylène | mg/L | 1 - 5 |
| Phénol | mg/L | 1 - 30 |
| Naphtalène | mg/L | 0,5 - 5 |
| Alcool benzylique | mg/L | 5 - 30 |
| 2-methyl phénol | mg/L | 1 - 5 |
| 3-methyl phenol | mg/L | 1 - 5 |
| 4-methyl phenol | mg/L | 1 - 5 |
| COT | mg/L | 20 - 150 |

Les essais ont été réalisés sans utilisation des résines, en les court-circuitant (circuit non représenté sur la figure), et avec leur utilisation, ce qui a permis de recueillir les informations suivantes.

Le traitement sans résine a montré un colmatage des membranes au bout d'un mois de service caractérisé par un perte de débit de perméat traversant les membranes d'osmose inverse de 20% à pression constante ou encore une augmentation de pression de 15% à débit de perméat constant. Ce phénomène n'a été observé qu'après 3 mois de fonctionnement avec l'utilisation des résines. Ceci confirme l'effet positif des résines sur la fréquence de nettoyage des membranes.

En termes de taux de conversion (débit de perméat produit / débit d'alimentation) de l'unité d'osmose inverse, sans utilisation des résines le taux de conversion était limité à 67%. L'utilisation des résines a permis son augmentation jusqu'à 83% sans aucun effet négatif sur la structure des membranes d'osmose inverse.

En termes de performances de traitement, l'ultrafiltration a permis de réduire la concentration des huiles et des matières en suspension à des niveaux inférieurs à 1 mg/L. Les résines, quant à elles, ont permis d'obtenir les abattements rassemblés dans le tableau 4 ci-dessous :

**Tableau 4**

| | **Résine 1 (polymère) (%)** | **Résine 2 (charbonnée) (%)** |
|---|---|---|
| Benzène | 99,5 ± 0,5 | 99,9 ± 0,1 |
| Toluène | 99,5 ± 0,5 | 99,9 ± 0,1 |
| Ethylbenzène | 99,5 ± 0,5 | 99,8 ± 0,1 |
| Xylène | 99,5 ± 0,5 | 99,8 ± 0,1 |
| Phénol | 96,5 ± 0,5 | 99,9 ± 0,1 |
| Naphtalène | 99,7 ± 0,3 | 99,9 ± 0,1 |
| Alcool benzylique | 84,0 ± 1,0 | 99,5 ± 0,5 |
| 2-methyl phénol | 99,5 ± 0,5 | 99,9 ± 0,1 |
| 3-methyl phénol | 99,5 ± 0,5 | 99,9 ± 0,1 |
| 4-methyl phenol | 99,5 ± 0,5 | 99,9 ± 0,1 |
| COT | 50,0 ± 5,0 | 85,0 ± 5,0 |

En termes de régénérabilité, les résines ont été régénérées par de la vapeur. Cette régénération a permis le recouvrement des capacités d'adsorption des résines à 80%, ce qui signifie que le cycle de production des résines neuves est supérieur de 20% à celles usagées. En outre, la condensation de la vapeur a permis de séparer les matières organiques adsorbées sur la première résine. Les conditions et les résultats de cette régénération sont indiqués dans le tableau 5 suivant.

**Tableau 5**

| Durée de cycle | 7 jours |
|---|---|
| Caractéristique de la vapeur | Résine 1 : 125°C à 2.4 bar |
| | Résine 2 : 150°C à 5.0 bar |
| % de matière valorisée | 99% ± 1 |

La régénération à l'éthanol a permis d'obtenir les mêmes performances que celle à la vapeur, en termes de recouvrement des capacités d'adsorption et des taux de matières organiques valorisables après l'évaporation et la récupération de l'éthanol.

Le mode de régénération combinant la vapeur comme utilité de régénération et de l'éthanol un cycle sur dix cycles de régénération a montré une meilleure performance en terme de taux de recouvrement de la capacité d'adsorption des résines car celle-ci se trouve augmentée et atteint 95%.

### Deuxième mode de réalisation

L'installation utilisée dans le cadre du deuxième mode de réalisation est la même que celle décrite en référence à la figure 1 avec la modification selon laquelle la colonne contenant la résine charbonnée a été shuntée, l'effluent transitant seulement dans la colonne contenant la résine polymérique non ionisée.

Des eaux phénolées provenant d'une industrie pétrochimiques ont été traitées dans cette installation ce qui a permis de réduire la concentration en phénol de 92% à savoir de 450 mg/l à 36 mg/l.

### Troisième mode de réalisation

L'installation utilisée dans le cadre du troisième mode de réalisation est la même que celle décrite en référence à la figure 1 avec la modification selon laquelle la colonne contenant la résine polymérique a été shuntée, l'effluent transitant seulement dans la colonne contenant la résine charbonnée.

Des effluents de pétrochimie provenant d'une unité de production d'acétates de cellulose contenant du diisopropylether ont été traitées dans cette installation ce qui a permis de réduire la concentration en cette substance de 300 mg/l à 40 mg/l.

## Revendications

1. Procédé de traitement des eaux provenant des industries pétrolières et gazières, notamment des eaux de production des champs pétroliers et/ou gaziers, en vue de leur réutilisation comprenant une étape de filtration desdites eaux sur membranes d'osmose inverse
**caractérisé en ce qu'**il comprend une étape d'adsorption de la matière organique contenue dans lesdites eaux, ladite étape d'adsorption étant prévue en amont de ladite étape de filtration et étant mise en œuvre sur au moins une résine adsorbante choisie dans le groupe constitué par les résines polymériques réticulées non ionisées et les résines charbonnées microporeuses.

2. Procédé selon la revendication 1 caractérisé en qu'il comprend une étape de prétraitement prévue en amont de ladite étape d'adsorption de la matière organique.

3. Procédé selon la revendication 2 **caractérisé en ce que** ladite étape de prétraitement consiste en un traitement physico-chimique, un traitement biologique ou encore un traitement plus élaboré combinant les deux traitements précités.

4. Procédé selon l'une quelconque des revendications 1 à 3 **caractérisé en ce que** ladite étape d'adsorption est mise en œuvre sur une résine spécifique adsorbante dédiée à l'élimination d'un composé organique cible.

5. Procédé selon l'une quelconque des revendication 1 à 3 **caractérisé en ce que** ladite étape d'adsorption est mise en œuvre sur deux ou plusieurs résines adsorbantes permettant l'élimination d'un ou plusieurs composés organiques.

6. Procédé selon l'une quelconque des revendications 1 à 5 **caractérisé en ce qu'**il comprend une étape de régénération in situ de ladite au moins une résine adsorbante.

7. Procédé selon la revendication 6 **caractérisé en ce que** ladite étape de régénération in situ de ladite au moins une résine adsorbante est réalisée par un média de régénération choisi dans le groupe constitué par de la vapeur d'eau chauffée à une température comprise entre 120°C et 200° C, préférentiellement entre 120 °C et 150 °C, un solvant à faible point d'ébullition, une base, un acide, ou par la combinaison de deux ou plusieurs de ces médias de régénération.

8. Procédé selon la revendication 7 **caractérisé en ce que** ledit média de régénération est un solvant à faible point d'ébullition, tel que de l'alcool, et **en ce qu'**il comprend de plus une étape ultérieure de recyclage dudit solvant par évaporation conduisant à l'obtention de deux phases : une phase condensée constituée de solvant régénéré apte à être réutilisé lors d'une étape ultérieure de régénération in situ de ladite au moins une résine adsorbante et une phase organique constituée des matières organiques adsorbées.

9. Procédé selon la revendication 7 **caractérisé en ce que** ledit média de régénération est de la vapeur d'eau et **en ce qu'**il comprend de plus une étape ultérieure de condensation de ladite vapeur d'eau conduisant à l'obtention de deux phases : une phase aqueuse constituée d'eau saturée en composés organiques, et une phase organique constituée des matières organiques adsorbées.

10. Procédé selon la revendication 9 **caractérisé en ce qu'**il comprend une étape de traitement de ladite phase aqueuse constituée d'eau saturée en composés organiques consistant à la faire passer sur ladite au moins une résine adsorbante de façon à la désaturer en composés organiques et conduisant à une eau apte à être réutilisée lors d'une étape ultérieure de régénération in situ de ladite au moins une résine adsorbante.

11. Procédé selon les revendications 8 ou 9 **caractérisé en ce que** lesdites eaux industrielles sont des eaux de production des champs pétroliers et/ou gaziers et **en ce que** ladite phase organique constituée des matières organiques adsorbées est constituée de pétrole et de matières organiques diverses.

12. Installation pour la mise en œuvre du procédé selon l'une quelconque des revendications 1 à 11 **caractérisée en ce qu'**elle comprend :
- des moyens d'amenée (1) d'eaux industrielles ;
- au moins une unité de filtration membranaire par osmose inverse (6, 7) ;
- au moins une colonne de résine adsorbante (4, 5) choisie dans le groupe constitué par les résines polymériques réticulées non ionisées et les résines charbonnées microporeuses ;
- des moyens d'évacuation d'eaux traitées (10) ;
ladite au moins une colonne (4, 5) étant prévue en amont de ladite au moins une unité de filtration membranaire par osmose inverse (6, 7).

13. Installation selon la revendication 12 **caractérisée en ce qu'**elle comprend au moins une unité de prétraitement (2, 3) prévue en amont de ladite au moins une colonne (4, 5).

14. Installation selon la revendication 12 ou 13 **caractérisée en ce qu'**elle comprend des moyens de régénération (8, 9) de ladite au moins une résine, à l'aide d'au moins un média de régénération choisi dans le groupe constitué par de la vapeur d'eau chauffée à une température comprise entre 120°C et 200° C, préférentiellement entre 120 °C et 150 °C, un solvant à faible point d'ébullition, une base, un acide, ou par la combinaison de deux ou plusieurs de ces médias de régénération.

15. Installation selon la revendication 14 **caractérisée en ce qu'**elle comprend des moyens de recyclage par évaporation/condensation dudit solvant après sont passage sur ladite au moins une colonne (4, 5).

16. Installation selon la revendication 14 **caractérisée en ce qu'**elle comprend des moyens de condensation de la vapeur d'eau après sont passage sur ladite au moins une colonne (4, 5), des moyens d'acheminement de la phase aqueuse ainsi obtenue en tête de ladite colonne (4, 5), et des moyens de récupération en pied de celle-ci d'une eau susceptible d'être chauffée pour donner de la vapeur de régénération.

## Patentansprüche

1. Verfahren zur Behandlung von Wässern aus der Erdöl- und Erdgasindustrie, insbesondere von auf Erdölfeldern und/oder Erdgasfeldern produzierten Wässern, zum Zwecke ihrer Wiederverwendung, umfassend einen Filtrationsschritt der Wässer auf Membranen durch umgekehrte Osmose
**dadurch gekennzeichnet, dass** es einen Adsorptionsschritt der in den Wässern enthaltenen organischen Materie umfasst, wobei der Adsorptionsschritt dem Filtrationsschritt vorgelagert vorgesehen ist und auf wenigstens einem adsorbierenden Harz durchgeführt wird ausgewählt aus der Gruppe bestehend aus den vernetzten nicht ionisierten Polymerharzen und den mikroporösen Kohlenstoffharzen.

2. Verfahren nach Anspruch 1, **dadurch gekennzeichnet, dass** es einen Vorbehandlungsschritt umfasst, dem Adsorptionsschritt der organischen Materie vorgelagert vorgesehen.

3. Verfahren nach Anspruch 2, **dadurch gekennzeichnet, dass** der Vorbehandlungsschritt aus einer physikalisch-chemischen Behandlung, einer biologischen Behandlung oder auch einer aufwändigeren Behandlung, die zwei zuvor genannten Behandlungen kombinierend, besteht.

4. Verfahren nach einem der Ansprüche 1 bis 3, **dadurch gekennzeichnet, dass** der Adsorptionsschritt auf einem spezifischen adsorbierenden Harz durchgeführt wird, geeignet für die Eliminierung einer organischen Zielverbindung.

5. Verfahren nach einem der Ansprüche 1 bis 3, **dadurch gekennzeichnet, dass** der Adsorptionsschritt auf zwei oder mehr adsorbierenden Harzen durchgeführt wird, die Eliminierung einer oder mehrerer organischer Verbindungen ermöglichend.

6. Verfahren nach einem der Ansprüche 1 bis 5, **dadurch gekennzeichnet, dass** es einen Regenerationsschritt in situ des wenigstens einen adsorbierenden Harzes umfasst.

7. Verfahren nach Anspruch 6, **dadurch gekennzeichnet, dass** der Regenerationsschritt in situ des wenigstens einen adsorbierenden Harzes durch ein Regenerationsmedium durchgeführt wird ausgewählt aus der Gruppe bestehend aus auf eine Temperatur zwischen 120 °C und 200 °C, bevorzugt zwischen 120 °C und 150 °C erhitztem Wasserdampf, einem Lösungsmittel mit niedrigem Siedepunkt, einer Base, einer Säure oder einer Kombination aus zwei oder mehr dieser Regenerationsmedien.

8. Verfahren nach Anspruch 7, **dadurch gekennzeichnet, dass** das Regenerationsmedium ein Lösungsmittel mit niedrigem Siedepunkt ist wie Alkohol und dadurch, dass es weiter einen späteren Schritt des Wiederaufbereitens des Lösungsmittels durch Verdampfen umfasst, zum Erhalten von zwei Phasen führend: einer kondensierten Phase, bestehend aus regeneriertem Lösungsmittel, in der Lage, bei einem letzten Regenerationsschritt in situ des wenigstens einen adsorbierenden Harzes wiederverwendet zu werden, und einer organischen Phase, die aus adsorbierten organischen Materien bestehend.

9. Verfahren nach Anspruch 7, **dadurch gekennzeichnet, dass** das Regenerationsmedium Wasserdampf ist und dadurch, dass es weiter einen späteren Kondensationsschritt des Wasserdampfs umfasst, zum Erhalten von zwei Phasen führend: einer wässrigen Phase, bestehend aus mit organischen Verbindungen gesättigtem Wasser, und einer organischen Phase, bestehend aus adsorbierten organischen Materien.

10. Verfahren nach Anspruch 9, **dadurch gekennzeichnet, dass** es einen Behandlungsschritt der wässrigen Phase, bestehend aus mit organischen Verbindungen gesättigtem Wasser, umfasst, bestehend aus deren Verteilen auf dem wenigstens einen adsorbierenden Harz, sodass sie von organischen Verbindungen entsättigt wird und zu einem Wasser führend, in der Lage, bei einem späteren Regenerationsschritt in situ des wenigstens einen adsorbierenden Harzes wiederverwendet zu werden.

11. Verfahren nach den Ansprüchen 8 oder 9, **dadurch gekennzeichnet, dass** die industriellen Wässer auf Erdölfeldern und/oder Erdgasfeldern produzierte Wässer sind und dadurch, dass die organische Phase, aus adsorbierten organischen Materialien bestehend, aus Erdöl und diversen organischen Materien besteht.

12. Vorrichtung für die Durchführung des Verfahrens nach einem der Ansprüche 1 bis 11, **dadurch gekennzeichnet, dass** sie Folgendes umfasst:
- Zufuhrmittel (1) für industrielle Wässer;
- wenigstens eine Einheit zur Membranfilterung durch umgekehrte Osmose (6, 7);
- wenigstens eine Säule von adsorbierendem Harz (4, 5), ausgewählt aus der Gruppe bestehend aus den vernetzten, nicht ionisierten Polymerharzen und den mikroporösen Kohlenstoffharzen;
- Evakuierungsmittel für behandelte Wässer (10);
wobei die wenigstens eine Säule (4, 5) der wenigstens einen Membran-Filtereinheit durch umgekehrte Osmose (6, 7) vorgelagert vorgesehen ist.

13. Vorrichtung nach Anspruch 12, **dadurch gekennzeichnet, dass** sie wenigstens eine Vorbehandlungseinheit (2, 3) umfasst, der wenigstens einen Säule (4, 5) vorgelagert vorgesehen.

14. Vorrichtung nach Anspruch 12 oder 13, **dadurch gekennzeichnet, dass** sie Regenerationsmittel (8, 9) des wenigstens einen Harzes umfasst, mithilfe wenigstens eines Regenerationsmediums ausgewählt aus der Gruppe bestehend aus auf eine Temperatur zwischen 120 °C und 200 °C, bevorzugt zwischen 120 °C und 150 °C erhitztem Wasserdampf, einem Lösungsmittel mit niedrigem Siedepunkt, einer Base, einer Säure, oder der Kombination von zwei oder mehr dieser Regenerationsmedien.

15. Vorrichtung nach Anspruch 14, **dadurch gekennzeichnet, dass** sie Mittel zum Wiederaufbereiten durch Verdampfen/Kondensieren des Lösungsmittels nach dessen Verteilung auf der wenigstens einen Säule (4, 5) umfasst.

16. Vorrichtung nach Anspruch 14, **dadurch gekennzeichnet, dass** sie Mittel zur Kondensation des Wasserdampfs nach dessen Verteilung auf der wenigstens einen Säule (4, 5) umfasst, Transportmittel der somit wässrigen gewonnenen Phase am Kopf der Säule (4, 5) und Mittel zur Rückgewinnung an deren Fuß eines zum Bereitstellen von Rückgewinnungsdampf erhitzbaren Wassers.

## Claims

1. Method for treating water from the oil and gas industries, especially production water from oil and/or gas fields, with a view to its re-utilization, comprising a step for filtering said water on reverse osmosis membranes
**characterized in that** it comprises a step of adsorption of the organic matter contained in said water, said step of adsorption being planned upstream to said step of filtration and being implemented on at least one adsorbent resin chosen from the group constituted by the non-ionic cross-linked resins and the microporous carbon resins.

2. Method according to claim 1, **characterized in that** it comprises a step of pre-treatment planned upstream to said step of adsorption of the organic matter.

3. Method according to claim 2, **characterized in that** said step of pre-treatment consists of a physical/chemical treatment, a biological treatment or again a more elaborate treatment combining the two of the above-mentioned treatments.

4. Method according to any one of the claims 1 to 3, **characterized in that** said step of adsorption is implemented on a specific adsorbent resin dedicated to the elimination of a target organic compound.

5. Method according to any one of the claims 1 to 3, **characterized in that** said step of adsorption is implemented on two or more adsorbent resins enabling the elimination of one or more organic compounds.

6. Method according to any one of the claims 1 to 5, **characterized in that** it comprises a step of in-situ regeneration of said at least one adsorbent resin.

7. Method according to claim 6, **characterized in that** said step of in-situ regeneration of said at least one adsorbent resin is achieved by a regeneration medium chosen from the group constituted by steam heated to a temperature of 120°C to 200°C, preferably 120°C to 150°C, a solvent with low boiling point, a base, an acid or by the combination of two or more of these regeneration media.

8. Method according to claim 7, **characterized in that** said regeneration medium is a solvent with low boiling point, such as alcohol, and **in that** it furthermore comprises a subsequent step for recycling said solvent by evaporation leading to the obtaining of two phases: a condensed phase constituted by regenerated solvent capable of being re-utilized during a subsequent step of in-situ regeneration of said at least one adsorbent resin and an organic phase constituted by adsorbed organic matter.

9. Method according to claim 7, **characterized in that** said regeneration medium is steam and **in that** it furthermore comprises a subsequent step of condensation of said steam leading to the obtaining of two phases: an aqueous phase constituted by water saturated in organic compounds and an organic phase constituted by adsorbent organic matter.

10. Method according to claim 9, **characterized in that** it comprises a step for treating said aqueous phase constituted by water saturated with organic compounds consisting in making it pass over said at least one adsorbent resin so as to de-saturate it of organic compounds and resulting in a water capable of being re-utilized during a subsequent step of in-situ regeneration of said at least one adsorbent resin.

11. Method according to either of the claims 8 or 9, **characterized in that** said industrial water is production water from the oil and/or gas fields and **in that** said organic phase constituted by adsorbed organic matter is constituted by petroleum and various kinds of organic matter.

12. Installation for implementing the method according to any one of the claims 1 to 11, **characterized in that** it comprises:
- means (1) for conveying industrial water;
- at least one reverse osmosis membrane filtration unit (6, 7);
- at least one column of adsorbent resin (4, 5) chosen from the group constituted by the non-ionic cross-linked polymer resins and the microporous carbon resins;
- means for discharging treated water (10);
said at least one column (4, 5) being planned upstream to said at least one reverse osmosis membrane filtration unit (6, 7).

13. Installation according to claim 12, **characterized in that** it comprises at least one pre-treatment unit (2, 3) planned upstream to said at least one column (4, 5).

14. Installation according to claim 12 or 13, **characterized in that** it comprises means for regenerating (8, 9) said at least one resin by means of at least one regeneration medium chosen from the group constituted by steam heated to a temperature of 120°C to 200°C, preferably 120°C to 150°C, a solvent with low boiling point, a base, an acid or a combination of two or more of these regeneration media.

15. Installation according to claim 14, **characterized in that** it comprises means for recycling by evaporation/condensation of said solvent after its passage in said at least one column (4, 5).

16. Installation according to claim 14, **characterized in that** it comprises means of condensation of the steam after its passage in said at least one column (4, 5), means for conveying the thus aqueous phase obtained to the head of said column (4, 5), and means for recovering, at the base of said column, a water capable of being heated to give regeneration steam.
